# EUROPEAN PATENT SPECIFICATION

(11) **EP 0 736 679 B1**
(45) Date of publication and mention of the grant of the patent: **15.10.1997**
(21) Application number: 96830185.3
(22) Date of filing: 02.04.1996
(51) Int. Cl.: F01N 7/18

(54) **Flexible tubular coupling member, for a motor-vehicle exhaust system**
Flexibles röhrenförmiges Verbindungselement, für die Abgasanlage eines Kraftfahrzeuges
Elément de connexion tubulaire flexible, pour un système d'échappement d'un véhicule à moteur

(30) Priority: 06.04.1995 IT TO950264
(43) Date of publication of application: 09.10.1996
(73) Proprietor: MAGNETI MARELLI S.p.A., 20145 Milano (IT)
(72) Inventor: Krause, Peter, 10040 Val della Torre (Torino) (IT)
(74) Representative: Notaro, Giancarlo

(56) References cited:
- DE-A- 3 506 626
- FR-A- 2 324 866
- US-A- 3 019 037

## Description

The present invention relates to the field of the flexible tubular coupling members for motor-vehicle exhaust systems, of the type comprising:
- a bellow-shaped metal tubular element, having end portions, within whose ends there are to be welded two tubes to be connected to each other by means of the coupling member, and
- an outer tubular casing made of metal braid and surrounding said bellow-shaped element.

A flexible tubular coupling member of this type, for example, is disclosed in DE-A-35 06 626.

Tubular members of the above indicated type have been used for example for coupling the outlet tube of the exhaust gas manifold of a motor-vehicle engine to the catalytic converter of the exhaust system. The bellow-shaped element achieves the object of reducing or nullifying the transmission of axial, bending and shear stresses due for example to the vibrations of the engine on its elastical supports with respect to the supporting structure of the motor-vehicle. At the same time, said flexible coupling member must of course ensure a good sealing against the exhaust gases at high temperature (up to 1100° C).

The drawback of the coupling flexible members which have been used thus far lies in that they are able to solve the above indicated means quite satisfactorily, whereas they are not able to fulfil a similar function with respect to dampening or nullifying the transmission of torsional stresses. Because of this inability of the flexible coupling members which have been used thus far, failures of components of the exhaust systems of motor-vehicles often take place due to the torsional movements transmitted to these components by the engine of the motor-vehicle.

In the view of solving this problem, the present invention provides a flexible tubular coupling member of the type which has been indicated at the beginning, characterized in that said outer casing of metal braid has one end welded to the cooperating end of the bellow-shaped element and the opposite end terminating with a neck portion freely rotatably mounted around the cooperating end portion of the bellow-shaped element, and said bellow-shaped element has corrugations shaped and arranged in such a way as to be able to absorb at least partially relative torsional movements of the two tubes to be connected.

In a preferred embodiment, said neck portion is welded to one end of the outer tubular casing of metal braid and is freely rotatably mounted on a bush welded to the respective end of the bellow-shaped element and having end edges bent outwardly to axially hold said neck portion. In a first embodiment said flexible element has a corrugated wall with circumferential crests lying in inclined planes, (preferably at 45°) with respect to a plane orthogonal to the tube axis.

In a second embodiment, said flexible element has a portion of the corrugated wall with longitudinal crests parallel to the tube axis and having a tapered or rectangular profile in a plane containing this axis.

In a further embodiment, said flexible element has both said portions of the corrugated wall with longitudinal crests parallel to the tube axis, and a further portion of corrugated wall with circumferential crests lying in planes orthogonal to the tube axis.

In all the said embodiments, the shape and arrangement of the corrugations of the bellow-shaped element make the latter able to absorb at least partially or to nullify the transmission of torsional movements between the two connected tubes.

Further features and advantages of the invention will become apparent from the following description with reference to the annexed drawings, given purely by way of non limiting example, in which:
- figure 1 is a view in cross section of a flexible coupling member according to the prior art,
- figure 2 is a cross section of a flexible coupling member according to a first embodiment of the invention,
- figure 3 is a view at an enlarged scale of the detail indicated by arrow III in figure 2,
- figure 4 is a partial view in cross section taken along line IV-IV of figure 2,
- figure 5 is a side view of a component of the flexible coupling member in a second embodiment of the invention,
- figure 6 is a view in cross section taken along line VI-VI of figure 5,
- figure 7,8 are details at an enlarged scale which show two variants of a detail of figure 5,
- figure 9 is a side view partially in cross section of a component of the flexible member in a third embodiment of the invention.

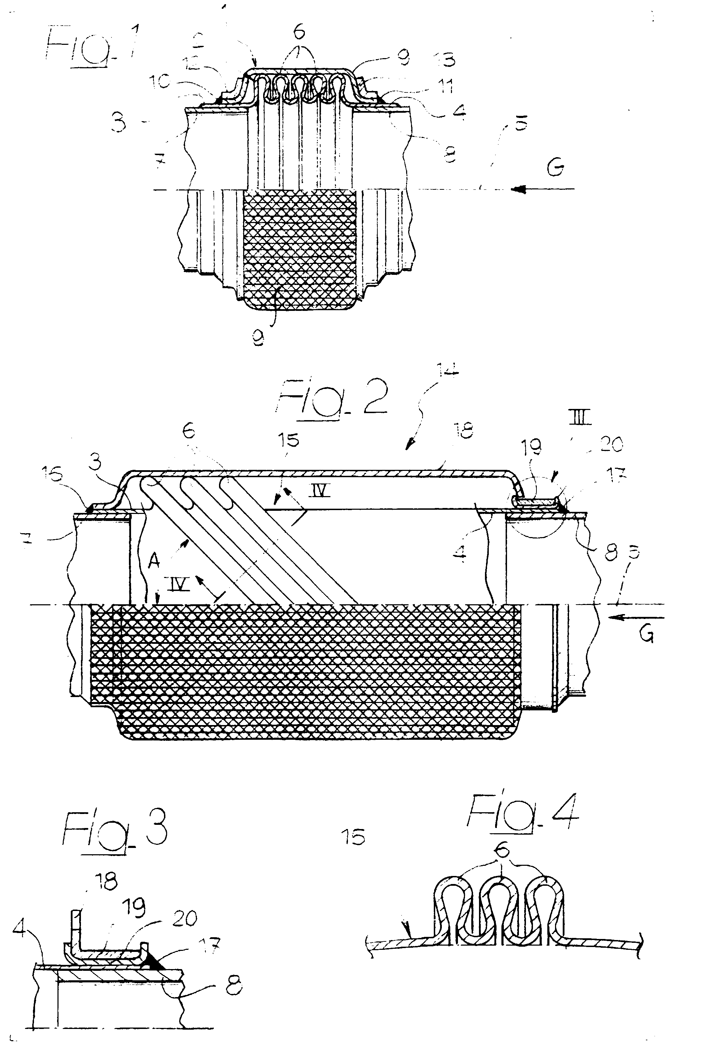

Figure 1 shows a flexible tubular coupling member according to the prior art, used for example to connect the outlet tube of the exhaust manifold of an internal combustion engine to the catalytic converter of the exhaust system of the motor-vehicle.

The flexible coupling member, generally designated by reference numeral 1, comprises a bellow-shaped tubular element 2 having two end portions 3,4 and an intermediate bellow-shaped portion having a corrugated profile in a cross-sectional plane containing the axis 5 of the tubular member, with circumferential crests 6 lying in planes orthogonal to the axis 5. Reference numerals 7,8 respectively designate the ends of the two tubes to be connected, which are welded within the two end portions 3,4 of the bellow-shaped tubular element 2, which is a metal element. This element is surrounded by an outer casing of metal braid 9 which has its ends welded to the end portions 3,4 of the bellow-shaped element 2, by welded joints 10,11, which also provide for fixing of the two strengthening metal rings 12,13.

Figures 2-4 relate to a first embodiment of the invention. In these figures, parts in common to those of figure 1 have been indicated by the same reference numerals. In this case, the flexible tubular coupling member, generally designated by reference numeral 14, also has a bellow-shaped metal tubular 15 having an intermediate bellow-shaped portion and two end portions 3,4 within which there are fixed the two tubes to be connected by welded joints 16,17. As it is clearly apparent from figures 2,4, in this case, however, the bellow-shaped element has corrugations having circumferential crests lying in planes inclined at an angle A, preferably of 45°, with respect to axis 5 (or a plane orthogonal to this axis). Also in this case there is provided an outer casing of metal braid 18 which has one end welded to the end portion 3 of the bellow-shaped element 15 and a tube 7 by means of said welded joint 16, whereas to the opposite end of this outer casing 18 there is welded a metal neck portion 19 (see also figure 3) which is freely rotatably mounted within a bush 20 which on its turn is welded to the end portion 4 of the bellow-shaped element 15 and the tube 8 by means of said welded joint 17. Bush 20 further has end edges bent radially outwardly to axially hold the neck portion 19. In figures 1,2, arrow G indicates the direction of the incoming exhaust gases. As shown, in the case of figure 2, contrary to the known solution of figure 1, any torsional movement of the inlet tube 8 are not transmitted to the outer casing 18, since the tube 8 with the end portion 4 of the bellow-shaped element 15 and the bush 20 is free to rotate with respect to the neck portion 19 connected to the outer casing 18. At the same time, the bellow-shaped element 15 is able to absorb partially or nullify the transmission of axial, bending, shear and also torsional movements.

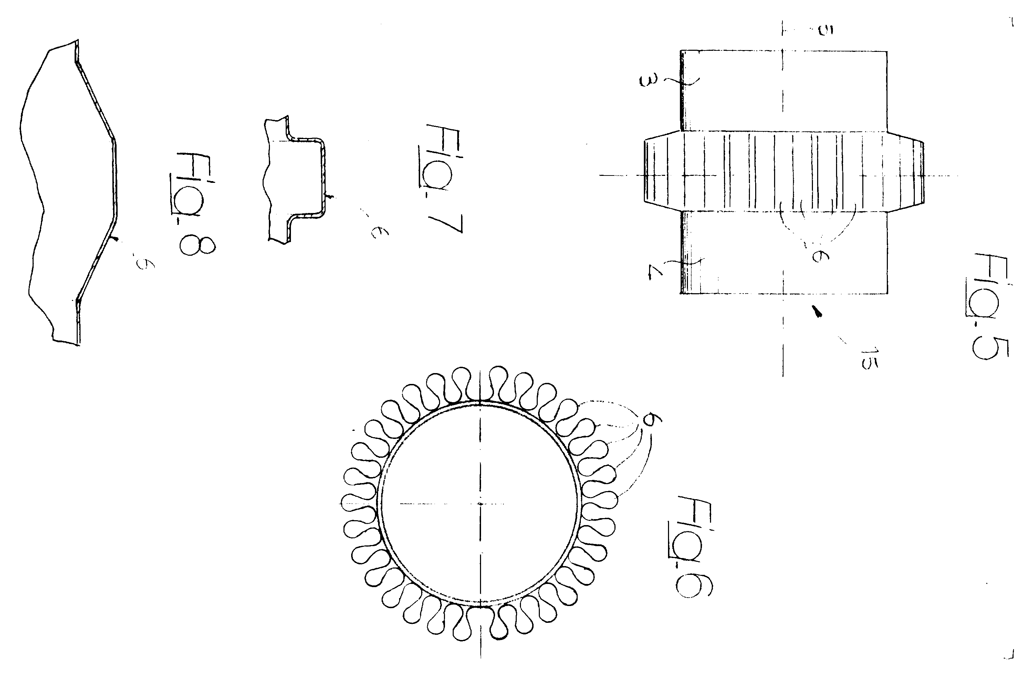

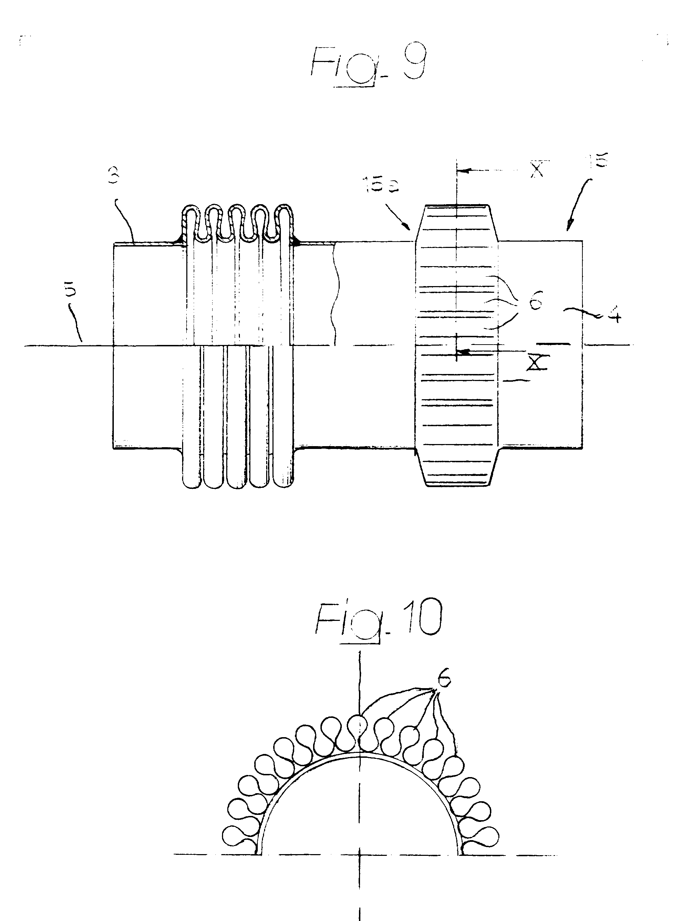

Figures 5,6 relate to a second embodiment which is similar to that of figure 2 except for a different shape of the bellow-shaped element 15. Therefore, these figures show only this element, which in this case has cylindrical end portions 3,4 and an intermediate portion having a corrugated profile in a plane orthogonal to the axis 5 of the tube (see figure 6). In this case, therefore, the crests of the corrugations, designated by 6, are directed longitudinally, i.e. parallel to the axis 5. Furthermore, as clearly apparent from figure 5, the profile of each crest in a plane containing axis 5 (see figure 5) has a substantially tapered profile with sides which are more or less inclined (see the variant of figure 5 and figure 8) or a rectangular shape (figure 7).

Figures 9,10 show a further variant in which the bellow-shaped element 15 has both a portion 15a identical to the central portion of the bellow-shaped element shown in figure 5,6, i.e. with crests 6 directed longitudinally and having a tapered or rectangular longitudinal profile, and a portion 15b of a conventional type, similar to that shown with reference to figure 1, with circumferential crests lying in planes orthogonal to axis 5. In this case, the portion 15b of the bellow-shaped element fulfils the task of absorbing the axial and bending movements, whereas portion 15a absorbs torsional movements.

## Claims

1. Flexible tubular coupling member for exhaust systems of motor-vehicles, comprising:
- a bellow-shaped metal tubular element (15), having end portions 3,4 within which there are to be welded two tubes (7,8) to be connected to each other by means of said member (14), and
- an outer tubular casing of metal braid (18) surrounding said bellow-shaped element (15),
characterized in that said outer casing of metal braid (18) has one end welded to the cooperating end (3) of the bellow-shaped element (15) and the opposite end terminating with a neck portion (19) freely rotatably mounted around the cooperating end portion (4) of the bellow-shaped element (15), and
said bellow-shaped element (15) has corrugations shaped and arranged in such a way as to be able to absorb at least partially relative torsional movements of the two tubes to be connected (7,8).

2. Flexible tubular member according to claim 1, characterized in that said neck portion (19) is welded to one end of the outer tubular casing of metal braid (18) and is freely rotatably mounted on a bush (20) welded to the respective end of the bellow-shaped element (15) and having edges bent outwardly to axially hold said neck portion (19).

3. A flexible tubular member according to claim 1, characterized in that said bellow-shaped element (15) has a corrugated wall with circumferential crests lying in planes inclined with respect to a plane orthogonal to the axis (5) of the tube.

4. Flexible tubular member according to claim 3, characterized in that said inclination is substantially 45°.

5. Flexible tubular member according to claim 1, characterized in that said bellow-shaped element (15) has a portion of corrugated wall with longitudinal crests (6) directed parallel to the axis (5) of the tube and having a tapered or rectangular profile in a plane containing this axis (5).

6. Flexible tubular member according to claim 5, characterized in that said bellow-shaped element (15) has a further portion of corrugated wall (15b) with circumferential crests lying in planes orthogonal to the axis (5) of the tube.

## Patentansprüche

1. Flexibles röhrenförmiges Verbindungselement für die Abgasanlagen von Kraftfahrzeugen, mit:
- einem balgartig ausgebildeten röhrenförmigen Element (15) aus Metall, das Endbereiche (3, 4) aufweist, innerhalb denen zwei Rohre (7, 8) eingeschweißt sind, so daß sie mittels des Verbindungselements (14) miteinander verbunden sind, und
- einem äußeren röhrenförmigen Gehäuse aus einem Metallgeflecht (18), das das balgartig ausgebildete Element (15) umgibt,
**dadurch gekennzeichnet,**
daß ein Ende des äußeren Gehäuses aus Metallgeflecht (18) an das damit zusammenwirkende Ende (3) des balgartig ausgebildeten Elements (15) geschweißt ist und das entgegengesetzte Ende in einen Halsbereich (19) übergeht, der frei rotierbar um den damit zusammenwirkenden Endbereich (4) des balgartig ausgebildeten Elements (15) angeordnet ist, und
daß das balgartig ausgebildete Element (15) wellenförmige Ausformungen aufweist, die derartig ausgebildet und angeordnet sind, daß sie relative Torsionsbewegungen der beiden zu verbindenden Rohre (7, 8) zumindest teilweise absorbiert.

2. Flexibles röhrenförmiges Verbindungselement nach Anspruch 1, dadurch gekennzeichnet, daß der Halsbereich (19) an ein Ende des äußeren röhrenförmigen Gehäuses aus Metallgeflecht (18) geschweißt ist und auf einer Buchse (20) frei rotierbar angeordnet ist, die an das entsprechende Ende des balgartig ausgebildeten Elements (15) geschweißt ist und Kanten aufweist, die nach außen gebogen sind, um den Halsbereich (19) axial zu halten.

3. Flexibles röhrenförmiges Verbindungselement nach Anspruch 1 dadurch gekennzeichnet, daß das balgartig ausgebildete Element (15) eine wellenförmige Wandung mit umfangsseitig angeordneten Wellenkämmen aufweist, die in Ebenen liegen, die relativ zu einer Ebene, die im rechten Winkel zu der Achse (5) des Rohrs verläuft, geneigt sind.

4. Flexibles röhrenförmiges Verbindungselement nach Anspruch 3, dadurch gekennzeichnet, daß die Neigung etwa 45° beträgt.

5. Flexibles röhrenförmiges Verbindungselement nach Anspruch 1, dadurch gekennzeichnet, daß das balgartig ausgebildete Element (15) einen Bereich der wellenförmigen Wandung mit längs, parallel zu der Achse (5) des Rohrs ausgerichteten Wellenkämmen (6) aufweist und ein konisches oder rechteckiges Profil in einer Ebene hat, die diese Achse (5) enthält.

6. Flexibles röhrenförmiges Verbindungselement nach Anspruch 5, dadurch gekennzeichnet, daß das balgartig ausgebildete Element (15) einen weiteren Bereich der wellenförmigen Wandung (15b) mit umfangsseitig angeordneten Wellenkämmen aufweist, die in Ebenen liegen, die im rechten Winkel zu der Achse (5) des Rohrs verlaufen.

## Revendications

1. Élément d'accouplement tubulaire flexible pour des systèmes d'échappement de véhicules à moteur, comprenant :
- un élément tubulaire en métal et en forme de soufflet (15) ayant des parties d'extrémité (3, 4) à l'intérieur desquelles on doit souder deux tubes (7, 8) à connecter l'un à l'autre au moyen dudit élément (14), et
- un boîtier tubulaire extérieur en tresse de métal (18) qui entoure ledit élément en forme de soufflet (15),
caractérisé en ce que ledit boîtier extérieur en tresse de métal (18) a une extrémité soudée à l'extrémité coopérante (3) de l'élément en forme de soufflet (15) et son extrémité opposée se termine avec une partie de col (19) montée en rotation libre autour de la partie d'extrémité coopérante (4) de l'élément en forme de soufflet (15), et ledit élément en forme de soufflet (15) possède des ondulations conformées et agencées de telle manière qu'il est capable d'absorber au moins partiellement des mouvements de torsion relatifs des deux tubes à connecter (7, 8).

2. Élément tubulaire flexible selon la revendication 1, caractérisé en ce que ladite partie de col (19) est soudée à une extrémité du boîtier tubulaire extérieur de tresse de métal (18) et elle est montée en rotation libre sur une douille (20) soudée sur l'extrémité respective de l'élément en forme de soufflet (15) et présente des bordures recourbées vers l'extérieur pour tenir axialement ladite partie de col (19).

3. Élément tubulaire flexible selon la revendication 1, caractérisé en ce que ledit élément en forme de soufflet (15) possède une paroi ondulée avec des crêtes circonférentielles situées dans des plans inclinés par rapport à un plan perpendiculaire à l'axe (5) du tube.

4. Élément tubulaire flexible selon la revendication 3, caractérisé en ce que ladite inclinaison est sensiblement de 45°.

5. Élément tubulaire flexible selon la revendication 1, caractérisé en ce que ledit élément en forme de soufflet (15) possède une partie de paroi ondulée avec des crêtes longitudinales (6) dirigées parallèlement à l'axe (5) du tube et ayant un profilé effilé ou rectangulaire dans un plan qui contient cet axe (5).

6. Élément tubulaire flexible selon la revendication 5, caractérisé en ce que ledit élément en forme de soufflet (15) possède une autre partie de paroi ondulée (15b) avec des crêtes circonférentielles situées dans des plans perpendiculaires à l'axe du tube.
